# EUROPÄISCHE PATENTSCHRIFT

(11) **EP 2 622 266 B1**
(45) Veröffentlichungstag und Bekanntmachung des Hinweises auf die Patenterteilung: **12.04.2017**
(21) Anmeldenummer: 11784572.7
(22) Anmeldetag: 29.09.2011
(51) Int. Cl.: F21V 3/04, F21V 5/00, F21V 8/00, F21V 9/00, F21W 121/00, F21S 10/04, F21Y 115/10, G02B 6/00

(54) **LEUCHTKERZE MIT GETRÜBTEM LEUCHTKÖRPER**
FLAMELESS CANDLE HAVING A CLOUDY LUMINOUS ELEMENT
BOUGIE ÉLECTROLUMINESCENTE À ÉLÉMENT LUMINEUX OPALESCENT

(30) Priorität: 01.10.2010 AT 16472010
(43) Veröffentlichungstag der Anmeldung: 07.08.2013
(73) Patentinhaber: D. Swarovski KG, 6112 Wattens (AT)
(72) Erfinder: STOCKER, Adolf, 6393 St. Ulrich (AT); MAIER, Johannes, A-6020 Innsbruck (AT); SAUER, Markus, 6068 Mils (AT); PROWATKE, Stefan, 6112 Wattens (AT)
(74) Vertreter: Torggler & Hofinger Patentanwälte
(86) Internationale Anmeldenummer: PCT/AT2011/000399
(87) Internationale Veröffentlichungsnummer: WO 2012/040758

(56) Entgegenhaltungen:
- WO-A1-01/40702
- WO-A2-2007/005904
- WO-A2-2008/146290
- AT-U1- 11 037
- DE-U1-202004 003 595
- DE-U1-202008 005 398

## Beschreibung

Die Erfindung betrifft eine elektrische Leuchtkerze, mit einem, eine längliche Form aufweisenden Leuchtkörper und einer Lichtquelle, wobei der Leuchtkörper als Trübglas ausgebildet ist, wobei die Trübung durch im Leuchtkörper angeordnete Trübungsmittel erreicht wird.

Im Stand der Technik ist es seit geraumer Zeit bekannt, Kerzen durch elektrische Beleuchtungsvorrichtungen - so genannte elektrische Leuchtkerzen - zu ersetzen, zumal diese bequemer zu handhaben und sicherer zu verwenden sind als herkömmliche Kerzen mit offenem Feuer. Als schwierig gestaltet sich diesbezüglich die Imitation der Flamme durch die Beleuchtungsvorrichtung.

Die AT 11037 U1 zeigt eine Leuchtkerze, bei der ein Leuchtkörper in Form einer Flamme oberhalb eines Kerzenschafts angeordnet ist, wobei eine Kavität im Inneren des Leuchtkörpers vorgesehen ist, an deren Grenzflächen Licht aus dem Kerzenschaft in seitlicher Richtung totalreflektiert wird.

Die AT 411 847 B stellt eine elektrische Leuchtvorrichtung in Kerzenform dar, bei der das von einer Lichtquelle emittierte Licht zumindest teilweise über einen Kerzenschaft in den oberhalb liegenden Leuchtabschnitt gelangt. Der Leuchtabschnitt hat dabei eine derartige Form, dass das Licht hauptsächlich im spitzen Bereich des Leuchtabschnitts austritt, da hier die geometrischen Bedingungen für Totalreflexion nicht mehr erfüllt sind.

Mit diesen Beleuchtungsvorrichtungen ist es aber nur möglich, die geometrische Abstrahlcharakteristik einer Kerze zu imitieren. Eine Imitation hinsichtlich des Flackerns einer Flamme kann zudem durch eine entsprechende Ansteuerung der Leuchtdioden erreicht werden.

Die DE 20 2008 005 398 zeigt eine Beleuchtungseinrichtung mit einer Leuchtdiode und einem als Flammenkörper ausgebildeten Sichtteil. Der aus Kunststoff bestehende Sichtteil ist transparent für das von der Leuchtdiode ausgestrahlte Licht und enthält Effektpigmente in Form von Metallflocken mit Partikelgrößen zwischen 0,05 mm und 0,1 mm. Aufgrund der Partikelgröße erfolgt an den Metallflocken keine Streuung sondern eine wellenlängenabhängige Reflexion, wodurch der mit den Metallflocken versehene Kunststoffsichtteil als Rotfilter oder Gelbfilter wirken kann. Nachteilig ist bei dieser Beleuchtungseinrichtung die Tatsache, dass die Effektpigmente in Form der Metallflocken eine derartige Partikelgröße aufweisen, dass sie mit freiem Auge als Metallsplitter erkennbar sind, was dem optischen Eindruck abträglich ist. Darüber hinaus besteht der Sichtteil aus Kunststoff, was ebenfalls als wenig hochwertig empfunden wird. Zudem gibt es weniger Möglichkeiten der Nachbearbeitung eines Kunststoffkörpers.

Die EP 1 914 471 zeigt eine batteriebetriebene Beleuchtungseinrichtung mit einem flammenförmigen Leuchtkörper. Auch bei dieser Schrift ist der Flammenkörper aus Kunststoff hergestellt und wird demnach nicht als optisch hochwertig empfunden. In einer Ausführungsform sind im Flammenkörper Glaskugeln mit einem Durchmesser zwischen 0,05 mm und 0,5 mm verteilt. Die mit den Glaskugeln wechselwirkenden Lichtstrahlen werden aufgrund der Größe der Glaskugeln nicht gestreut sondern durch Brechung und Reflexion aus dem Flammenkörper herausgeleitet. Wiederum ergibt sich ein unästhetischer Eindruck aufgrund der mit freiem Auge erkennbaren Glaskugeln.

Aufgabe der Erfindung ist es, obige Beleuchtungsvorrichtungen weiter zu verbessern und insbesondere bei der Imitation einer Flamme auch den in einer Flamme existierenden Temperaturgradienten und die damit verbundene spektrale Abstrahlcharakteristik zu berücksichtigen, ohne dass Reflexionspartikel für das Licht mit freiem Auge im Leuchtkörper erkennbar sind.

Dies wird durch eine elektrische Beleuchtungsvorrichtung mit den Merkmalen des Anspruchs 1 erreicht.

Die elektrische Beleuchtungsvorrichtung weist einen Leuchtkörper und eine Lichtquelle auf, wobei von der Lichtquelle emittiertes Licht über den Leuchtkörper in den freien Raum abgestrahlt wird. Die elektrische Beleuchtungsvorrichtung kann insbesondere als elektrische Leuchtkerze ausgebildet sein, wobei der Leuchtkörper in diesem Fall einen Kerzenschaft und einen an einem Ende des Kerzenschafts angeordneten Leuchtabschnitt aufweist.

Der Leuchtkörper ist als Trübglas ausgebildet, wobei die Trübung dieses Glases durch in einem Grundglas angeordnete Trübungsmittel erreicht wird. Erfindungsgemäß ist nun vorgesehen, dass der Leuchtkörper zumindest in einer Ausbreitungsrichtung des von der Lichtquelle emittierten Lichts eine derartige Materialstärke aufweist, dass in dieser Ausbreitungsrichtung im Leuchtkörper eine für das menschliche Auge sichtbare Farbumwandlung des von der Lichtquelle bestrahlten Leuchtkörpers erfolgt.

Die Erfindung hat realisiert, dass die im Grundglas angeordneten Trübungsmittel als Streuzentren dienen, wobei über Rayleigh-Streuung bevorzugt der kurzwellige Teil des von der Lichtquelle emittierten Lichtes gestreut wird. Je länger demnach der Weg zumindest in eine Ausbreitungsrichtung des von der Lichtquelle emittierten Lichts durch das Trübglas ist, umso mehr wird vom hochfrequenten Anteil des Lichtes gestreut, während der niederfrequente Anteil von den Trübungsmitteln weniger beeinflusst wird, sodass sich die spektrale Zusammensetzung des vom Leuchtkörper austretenden Lichtes entlang dieser Ausbreitungsrichtung verändert, wodurch der von der Lichtquelle bestrahlte Leuchtkörper nicht in einer homogenen Farbe abstrahlt. Insbesondere ergibt sich entlang der Ausbreitungsrichtung, in der die Materialstärke entsprechend groß ist, ein Farbverlauf bei sich in Betrieb befindlicher Beleuchtungsvorrichtung.

Die als Streuzentren dienenden Trübungsmittel haben in einer Ausführungsform der Erfindung eine Partikelgröße zwischen 10 nm und 100 nm, vorzugsweise zwischen 30 nm und 90 nm. Streuzentren mit einer derartigen Größe sind viel kleiner als die Wellenlängen von Licht des sichtbaren Spektralbereichs, wodurch an diesen Streuzentren zum Großteil Rayleigh-Streuung auftritt. Die Streuzentren sind dabei so klein, dass sie mit freiem Auge nicht erkennbar sind und daher den optischen Eindruck der Beleuchtungsvorrichtung nicht stören. Der als Trübglas ausgebildete Leuchtkörper trägt ebenso zum hochwertigen optischen Eindruck der Beleuchtungsvorrichtung bei.

Ist die Materialstärke des Leuchtkörpers zumindest in einer Ausbreitungsrichtung des von der Lichtquelle emittierten Lichts groß genug, sind entlang dieser Ausbreitungsrichtung ausreichend viele für die Trübung des Trübglases verantwortliche, als Streuzentren dienende Trübungsmittel angeordnet, sodass ein entsprechend hoher Anteil des kurzwelligen Lichtes aus dem Leuchtkörper gestreut wird, sodass eine für das menschliche Auge sichtbare Farbumwandlung des von der Lichtquelle bestrahlten Leuchtkörpers erfolgt.

Dabei wird - bis auf die im Leuchtkörper stets vorhandene Absorption des Lichtes - die von der Lichtquelle emittierte Lichtmenge durch den Leuchtkörper nicht wesentlich reduziert. Aus diesem Grund wird auch die spektrale Zusammensetzung des insgesamt von der Beleuchtungseinrichtung abgestrahlten Lichts nur unwesentlich verändert. Durch die Trübung werden aber die Anteile des Lichts auf ihrem Weg durch den Leuchtkörper selektiv gestreut und treten nach dieser Streuung an verschiedenen Stellen aus dem Leuchtkörper aus, sodass sich die spektrale Zusammensetzung entlang des Leuchtkörpers verändert und sich somit der erfindungsgemäße Farbverlauf einstellt. Die lokale spektrale Zusammensetzung des vom Leuchtkörper abgestrahlten Lichts wird also verändert. Die gesamte von der Beleuchtungseinrichtung emittierte Lichtmenge entspricht bis auf die oben angeführte Absorption der von der Lichtquelle emittierten Lichtmenge.

Die im Stand der Technik bekannte Glühbirnen aus sogenanntem Milch- oder Opalglas sind so dünn, dass ein derartiger Effekt für das menschliche Auge nicht erkennbar ist. Derartige Glühbirnen aus Milch- oder Opalglas dienen nur dazu, einen Teil des von der Glühwendel erzeugten Lichtes abzublocken und die Blendwirkung zu verringern.

Demgegenüber hat die Erfindung realisiert, den oben beschriebenen Streueffekt zur Erzeugung eines Farbverlaufs bei sich in Betrieb befindlicher Beleuchtungsvorrichtung zu benutzen, indem der Leuchtkörper eine derartige Materialstärke aufweist, dass für das menschliche Auge ein qualitativer Effekt erkennbar ist.

So kann, bei entsprechender Auswahl der Lichtquelle, ein länglicher Leuchtkörper beispielsweise im unteren, näher an der Lichtquelle angeordneten Bereich blau leuchten. Entlang der Ausbreitungsrichtung des Lichts wird mehr vom kurzwelligen blauen Anteil des Lichtes durch die Trübungsmittel gestreut, sodass bei ausreichender Materialstärke des Leuchtkörpers das von der Lichtquelle weiter entfernte Ende des Leuchtkörpers rötlich leuchtet. Bei sich nicht in Betrieb befindlicher Beleuchtungsvorrichtung ist bei homogener Trübung kein Farbverlauf erkennbar. Dieser ergibt sich nur, wenn die Lichtquelle der Beleuchtungsvorrichtung in Betrieb ist.

Als Maß für den Farbeindruck einer Lichtquelle kann die korrelierte Farbtemperatur (Correlated Colour Temperature; CCT) dienen, die als Temperatur eines schwarzen Körpers definiert ist, die zu einer bestimmte Lichtfarbe dieser Strahlungsquelle gehört, wobei jene Temperatur maßgeblich ist, die bei gleicher Helligkeit und unter festgelegten Beobachtungsbedingungen der zu beschreibenden Farbe am ähnlichsten ist.

Darüber hinaus dient der Farbwiedergabeindex (Colour Rendering Index; CRI) als fotometrische Größe, mit der sich die Qualität der Farbwiedergabe von Lichtquellen mit gleicher korrelierter Farbtemperatur beschreiben lässt.

Die Lichtquelle emittiert dabei Licht mit breiter spektraler Verteilung im Wellenlängenbereich zwischen 380 nm und 780 nm, wobei ein Farbwiedergabeindex von zumindest 50 erreicht werden kann.

Ist nun in einer Ausbreitungsrichtung des Lichtes eine genügend hohe Materialstärke des Leuchtkörpers, bestehend aus Trübglas, vorhanden, sodass für das menschliche Auge eine sichtbare Farbumwandlung erfolgt, bedeutet dies, dass Licht, welches in zu dieser Ausbreitungsrichtung seitlicher, z.B. senkrechter Richtung aus dem Leuchtkörper austritt, je nach Entfernung der Lichtquelle vom Austrittsort aus dem Leuchtkörper eine unterschiedliche Farbe aufweist, sodass sich bei einer Messung der korrelierten Farbtemperatur oder des Farbwiedergabeindex von derart aus dem Leuchtkörper austretenden Licht eine Veränderung entlang des Leuchtkörpers in dieser Ausbreitungsrichtung ergibt, die auch für das menschliche Auge nachvollziehbar ist.

Weitere vorteilhafte Ausführungen der Erfindung sind in den abhängigen Ansprüchen definiert.

Erfindungsgemäß weist der Leuchtkörper eine längliche Form auf, sodass eine Längsrichtung existiert und die Ausdehnung in Längsrichtung, die Ausdehnungen des Leuchtkörpers in dazu senkrechten Richtungen übertrifft. Ist die Beleuchtungsvorrichtung derart ausgebildet, dass Licht von der Lichtquelle in Richtung dieser Längsrichtung ausgestrahlt wird, ist genügend Materialstärke vorhanden, sodass eine genügend hohe Anzahl an streuenden Trübungsmitteln vorhanden sind, um für die sichtbare Farbumwandlung zu sorgen.

Obgleich von einem menschlichen Auge bereits bei einer Materialstärke ab 5 mm - je nach Trübungsgrad, der ein Maß für die Dichte der Trübungsmittel im Leuchtkörper darstellt - eine sichtbare Farbumwandlung erfolgt, ist bevorzugt vorgesehen, einen länglichen Körper mit einer Längsausdehnung zwischen 10 und 100 mm für die Beleuchtungsvorrichtung zu verwenden.

Der durchschnittliche Durchmesser eines Leuchtkörpers mit länglicher Form kann zwischen 10 und 30 mm aufweisen, wobei nicht notwendigerweise ein konstanter Durchmesser vorhanden sein muss. Reizvolle optische und ästhetische Effekte können von länglichen Körpern, deren Querschnitt entlang der Längsrichtung nicht konstant ist, und die eine Krümmung in Längsrichtung aufweisen, realisiert werden.

Einen weiteren ästhetischen Effekt, mit dem die Imitation einer Kerze weiter verbessert werden kann, ergibt sich, wenn der Leuchtkörper eine stilisierte Flammenform aufweist. Durch einen facettiert geschliffenen Leuchtkörper ergeben sich an den Kanten zwischen den Facetten weitere reizvolle Brechungseffekte. Zudem wirkt ein facettiert geschliffener Leuchtkörper auch bei nicht in Betrieb befindlicher Beleuchtungsvorrichtung optisch reizvoll.

In einer bevorzugten Ausführungsform ist der Leuchtkörper als Vollkörper ausgebildet, wodurch sich in einfacher Weise die nötige Materialstärke in einer Ausbreitungsrichtung des Lichts realisieren lässt. Die Lichtquelle kann an einem Ende des Leuchtkörpers angeordnet sein. Ist ein Teil des Leuchtkörpers als Kerzenschaft ausgebildet, an dessen Außenwandung sich die Lichtstrahlen mittels Totalreflexion zu einem Leuchtabschnitt ausbreiten oder des Außenwandung verspiegelt ist, kann die Lichtquelle unterhalb des Kerzenschafts angeordnet sein. Es kann aber auch vorgesehen sein, im Leuchtkörper bzw. im Kerzenschaft eine oder mehrere Ausnehmungen zur Anordnung von Lichtquelle(n) zur Verfügung zu stellen.

Die Lichtquelle ist bevorzugt in Form einer oder mehrerer Leuchtdioden ausgebildet. Leuchtdioden zeichnen sich durch ihre kompakte Baugröße, ihren geringen Energieverbrauch, ihre geringe Wärmeabgabe sowie ihre lange Lebensdauer aus. Im Falle mehrerer Leuchtdioden kann vorgesehen sein, dass diese Leuchtdioden Licht derselben Farbe abstrahlen. Es kann aber auch vorgesehen sein, dass Leuchtdioden verwendet werden, die jeweils Licht einer unterschiedlichen Farbe emittieren. Insbesondere kann es vorgesehen sein, dass die Farbe und/oder die Helligkeit bzw. Intensität des abgestrahlten Lichtes der Lichtquelle, insbesondere der Leuchtdioden mit einer Steuerungseinrichtung variierbar ist.

In einer weiteren Ausführungsform der Erfindung ist zwischen dem Leuchtkörper und der Lichtquelle ein optisches Element angeordnet. Dieses optische Element ist für Licht des sichtbaren Spektrums zumindest teilweise durchlässig und weist ebenfalls einen Anzahl an Streuzentren dar, von denen Licht einer bestimmten Wellenlänge gestreut wird. Damit wird der Anteil von Licht dieses Spektralbereichs, der in den Leuchtkörper gelangt reduziert. Das optische Element dient als "Vorstreuer". Es kann zu einer Reduktion der Farbtemperatur und der Leuchtdichte der in den Leuchtkörper dienenden Strahlung dienen, sofern die Streuzentren bevorzugt Licht höher Frequenz streuen. Dabei kann dieses optische Element in einem Gehäuse der Beleuchtungseinrichtung angeordnet sein, sodass es unter normalen Betrachtungswinkeln nicht erkennbar ist. Das optische Element kann auch Teil des Leuchtkörpers sein oder sogar zusammen mit dem Leuchtkörper einstückig ausgebildet sein. Insbesondere kann dieses optische Material aus demselben Grundglas wie der Leuchtkörper hergestellt sein, und ebenfalls mit Trübungsmitteln versetzt sein. Der Trübungsgrad des optischen Elements kann im Wesentlichen gleich wie der Trübungsgrad des Leuchtkörpers aber auch verschieden davon ausgebildet sein.

Im Bereich der Lichtquelle und des angrenzenden Teils des Leuchtkörpers kann zusätzlich oder alternativ ein Reflektor angeordnet sein, um die in diesem Bereich des Leuchtkörpers vom Leuchtkörper, sowie gegebenenfalls die vom als Vorstreuer wirkenden optischen Element gestreute Strahlung, abzulenken. Dabei kann diese Ablenkung in eine Längsrichtung des Leuchtkörpers erfolgen. Dabei kann dieser Reflektor in einem Gehäuse der Beleuchtungseinrichtung angeordnet sein, sodass es unter normalen Betrachtungswinkeln nicht erkennbar ist.

In einer Ausführungsform der Erfindung weist der Leuchtkörper eine im Wesentlichen homogene Trübung auf. Dies wird durch eine homogene Verteilung der Streuzentren im Leuchtkörper erreicht. Dadurch wird entlang des gesamten Leuchtkörpers ein gleicher Anteil an kurzwelligem Licht gestreut.

Alternativ kann der Leuchtkörper einen Trübungsverlauf aufweisen, also eine insbesondere entlang einer Längsrichtung des Leuchtkörpers variierende Trübung. Dies wird durch eine inhomogene Konzentration an als Streuzentren dienenden Trübungsmittel im Leuchtkörper erreicht. Dadurch ist es beispielsweise möglich, die Streuzentren derart zu verteilen, dass anfänglich besonders wenig Licht mit hochfrequenter Strahlung gestreut wird, während im Bereich des von der Lichtquelle entfernten Endes des Leuchtkörpers dieser gestreute Anteil zunimmt. Dadurch sind besonders reizvolle optische Effekte realisierbar. Zudem kann ein derartiger Trübungsverlauf auch bei nicht in Betrieb befindlicher Beleuchtungsvorrichtung erkennbar sein.

Sowohl bei homogener Trübung als auch bei einem Trübungsverlauf kann der Leuchtkörper bei sich nicht in Betrieb befindlicher Beleuchtungsvorrichtung von einer fast nicht sichtbaren Opalfarbe, über ein opalartiges oder getrübt milchartiges Aussehen, bis hin zu einem alabasterartigen oder einen rein weißen Farbe aufweisen. Darüber hinaus kann vorgesehen sein, den Leuchtkörper zusätzlich einzufärben, wodurch die mittels der als Streuzentren fungierenden Trübungsmitteln im Leuchtkörper erzeugte Farbumwandlung geändert wird, weil die beispielsweise als Farbschicht auf dem Leuchtkörper aufgebrachte zusätzliche Farbe einen von der Farbschicht abhängigen Spektralanteil ausfiltert. Durch eine zusätzliche Einfärbung des gesamten Leuchtkörpers, beispielsweise durch Einbringen von speziellen Farbstoffen in die Schmelze zur Erzeugung des Leuchtkörpers, ist ebenfalls die durch die Trübungsmittel erzeugte Farbumwandlung veränderbar.

Der Grad der Trübung, d.h. die Konzentration an Trübungsmitteln im Leuchtkörper, kann in Abhängigkeit der geometrischen Form des Leuchtkörpers ausgewählt werden, um einen gewünschten Effekt zu erzielen.

Die Trübung des Leuchtkörpers kann erfolgen, indem den Bestandteilen eines Grundglases Trübungsmittel z.B. in Form von festen Teilchen beigemengt werden. Vorzugsweise handelt es sich dabei um Fluorträger. Diese Fluorträger können insbesondere Kryolith umfassen. Im Zuge der Verschmelzung der Bestandteile des Grundglases betten sich feste Teilchen, die aus den beigemengten Stoffen hervorgehen, im Glas ein. Dadurch trübt sich das Glas, wobei die eingebetteten Teilchen nach Formgebung und Aushärtung des Glases als Streuzentren für sich im Leuchtkörper ausbreitendes Licht fungieren.

Im Falle von Fluorträgern werden bei der Verschmelzung z.B. Natriumfluoride ausgeschieden, die dann letztendlich für die Trübung verantwortlich sind. Es ist aber auch möglich, als Trübungsmittel sich nicht-auflösende, schwer verschmelzende Oxide wie beispielsweise SnO₂, TiO₂ oder ZrO₂ dem Grundglas beizumengen und dadurch ein gewünschtes Trübglas zu erzeugen.

Erfindungsgemäß weisen die Trübungsmittel eine Partikelgröße zwischen 10 und 100 nm auf, vorzugsweise zwischen 30 und 90 nm, und dienen dadurch als Streuzentren für Rayleigh-Streuung.

In einer weiteren Ausführungsform der Erfindung sind die Trübungsmittel in Form einer Emulsion ausgebildet, die durch das Ausbilden von mindestens zwei Glasphasen bei der Zugabe von Phosphaten oder anderen Emulsionsbildnern entsteht.

Als Grundglas kommen vorzugsweise bleifreie Gläser zum Einsatz, wobei ein erfindungsgemäßes Trübglas auch mit bleihältigen Grundgläsern herstellbar ist. Ein Beispiel für die möglichen Bestandteile eines Grundglases und von möglichen Trübungsmitteln samt ihrem jeweiligen Anteil an Gewichtsprozenten ist in folgender Tabelle aufgelistet:

| | Gew % | |
|---|---|---|
| Oxid | von | bis |
| SiO₂ | 40 | 80 |
| K₂O | 0 | 18 |
| Na₂O | 4 | 20 |
| Li₂O | 0 | 8 |
| ZnO | 0 | 15 |
| CaO | 0 | 15 |
| MgO | 0 | 10 |
| BaO | 0 | 25 |
| SrO | 0 | 15 |
| PbO | 0 | 45 |
| Al₂O₃ | 0 | 8 |
| SnO₂ | 0 | 10 |
| TiO₂ | 0 | 10 |
| ZrO₂ | 0 | 8 |
| B₂O₃ | 0 | 25 |
| AS₂O₃ | 0 | 5 |
| Sb₂O₃ | 0 | 5 |
| F | 0 | 8 |
| P₂O₃ | 0 | 8 |

Sollte eine zusätzliche Einfärbung des Trübglases gewünscht sein, können dem Grundglas an sich bekannte, farbgebende Bestandteile in den üblichen Dosierungen, beispielsweise Kadmium oder Kupferoxide für eine rote Einfärbung zugegeben werden.

Darüber hinaus können mittels bestimmter Additive, die dem Grundglas beigemengt werden, dem Trübungsmittel gewünschte physikalische Eigenschaften, wie z.B. einen bestimmten Brechungsindex oder einen Ausdehnungskoeffizienten, verliehen werden. Derartige Additive sind z.B. La, Nb, Ta, Y, Rb, Sc, W oder Bi.

Die Erfindung betrifft darüber hinaus einen Leuchtkörper für eine wie oben erläuterte Beleuchtungsvorrichtung, wobei der Leuchtkörper wie oben beschrieben ausgebildet ist.

Die Erfindung betrifft darüber hinaus ein Verfahren zur Herstellung eines wie oben beschriebenen Leuchtkörper, wobei die Bestandteile eines Grundglases mit Trübungsmitteln vermengt und anschließend verschmolzen werden.

Obgleich bereits nach diesen Verfahrensschritten eine gewisse Trübung vorhanden sein kann, kann weiters vorgesehen sein, nach einer Abkühlung der verschmolzenen Stoffe einen weiteren Temperaturbehandlungsschritt durchzuführen, wobei die abgekühlten verschmolzenen Stoffe wiederum für eine gewisse Zeit auf eine gewisse Temperatur erhitzt werden. Dieser Temperaturbehandlungsschritt ist im Allgemeinen als Anlassen bekannt. Durch das Anlassen wird die Trübung in einem gewünschten Ausmaß eingestellt. Bei einem Trübungsverlauf kann es beispielsweise vorgesehen sein, entlang des Leuchtkörpers die Trübung von fast zur Gänze ungetrübt bis fast opalfarbig verlaufend zu gestalten. Wird die äußere geometrische Form des Leuchtkörpers bereits vor dem Anlassen hergestellt, dient der Anlassprozess auch dazu, die Trübung an die Geometrie des Leuchtkörpers anzupassen. Die Formgebung kann aber auch nach oder während des Anlassens erfolgen.

In einer Ausführungsform der Erfindung erfolgt das Anlassen bei einer Temperatur, die zwischen der Transformationstemperatur des Grundglases und einer Temperatur, die um 100 °C über der Transformationstemperatur des Grundglases liegt, erfolgt. Die Transformationstemperatur entspricht dabei der Temperatur des Transformationspunktes und hängt von den Bestandteilen des Glases ab. Dabei kann die Transformationstemperatur auch einem gewissen Temperaturbereich entsprechen, da die beim Transformationspunkt sich einstellende Transformation des Glases nicht notwendigerweise an einem einzigen Punkt, sondern auch in einem gewissen engen Bereich erfolgt.

Weitere Einzelheiten und Vorteile der vorliegenden Erfindung werden anhand der Figurenbeschreibung unter Bezugnahme auf die Zeichnungen im Folgenden näher erläutert. Darin zeigt:
- Fig. 1: eine Querschnittsdarstellung einer erfindungsgemäßen Beleuchtungsvorrichtung samt verschiedener Lichtstrahlen,
- Fig. 2: eine schematische Darstellung der Messanordnung zur Messung der Diagramme der Figuren 3a bis 3c,
- Fig. 3a bis 3c: gemessene Farbtemperatur entsprechend der Messanordnung der Fig. 2, und
- Fig. 4: eine schematische Darstellung der Messanordnung zur Messung der korrelierten Farbtemperatur der seitlich aus einem Leuchtkörper austretenden Lichtstrahlen

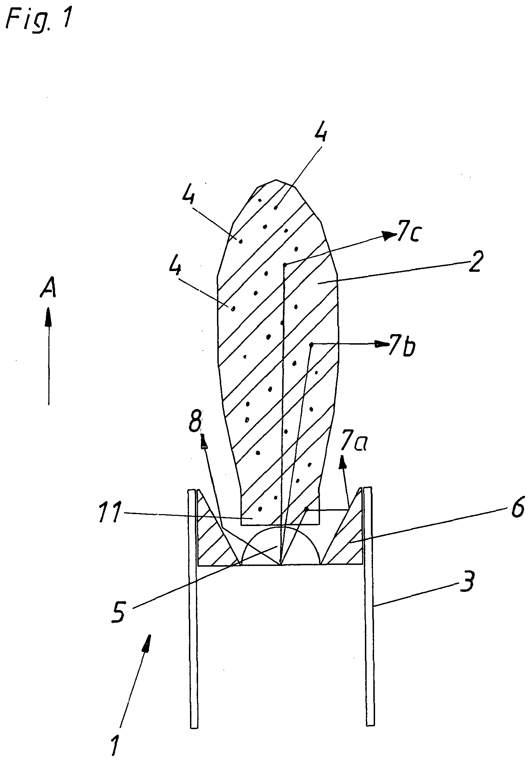

Fig. 1 zeigt eine erfindungsgemäße Beleuchtungsvorrichtung 1, umfassend ein Gehäuse 3, in der eine Lichtquelle 5, vorzugsweise umfassend eine oder mehrere Leuchtdiode(n), und einen eine längliche Form aufweisenden Leuchtkörper 2. Die Lichtquelle ist rein schematisch dargestellt. Der Leuchtkörper 2 ist als facettiert geschliffener Vollkörper ausgebildet. Der Leuchtkörper 2 besteht aus Trübglas. Dies wird durch die schematisiert dargestellten Trübungsmittel 4, die im Leuchtkörper 2 verteilt sind, repräsentiert. Innerhalb des Gehäuses 3 ist weiters ein Reflektor 6 angeordnet, mit dem von der Lichtquelle 5 in seitlicher Richtung abgestrahlte Lichtstrahlen 8 zumindest teilweise in Längsrichtung A des Leuchtkörpers 2 umgelenkt werden, und dadurch ebenfalls zur Beleuchtung dienen können. Die Farbe dieser sich nicht durch den Leuchtkörper 2 ausbreitenden Lichtstrahlen 8 entspricht der Farbe des von der Lichtquelle 5 emittierten Lichts.

Zwischen dem Leuchtkörper 2 und der Lichtquelle 5 ist ein optisches Element 11 angeordnet, in das der Großteil der von der Lichtquelle 5 emittierten Lichtstrahlen eintritt und das für Licht des sichtbaren Spektrums zumindest teilweise durchlässig ist. Das optische Element 11 ist in dieser Ausführungsform integraler Bestandteil des Leuchtkörpers 2 und als zylinderförmiger Teil ausgebildet, der unterhalb der oberen Gehäusekante des Gehäuses 3 angeordnet ist und denselben Trübungsgrad als der Leuchtkörper 2 aufweisen kann. Der erfindungsgemäße Leuchtkörper 2 ist demgegenüber oberhalb der der oberen Gehäusekante des Gehäuses 3 angeordnet, sodass von diesem ausgehende Lichtstrahlen direkt zu einem Beobachter gelangen können.

Vom optischen Element 11 wird in dieser Ausführungsform bevorzugt Licht kürzerer Wellenlänge gestreut und gelangt nicht in den Leuchtkörper 2, wodurch dessen Anteil im Leuchtkörper 2 und damit die Farbtemperatur bereits beim Eintritt in den Leuchtkörper 2 reduziert ist. Das optische Element 11 dient somit als "Vorstreuer", wobei die gestreuten Lichtstrahlen über den Reflektor 6 in Längsrichtung A des Leuchtkörpers 2 abgelenkt werden. Statt des optischen Elements 11 kann aber die Lichtquelle auch direkt an den Leuchtkörper 2 angrenzen.

Die sich im optischen Element 11 und im Leuchtkörper 2 ausbreitenden Lichtstrahlen werden an den Trübungsmitteln 4, die als Streuzentren dienen, gestreut, wobei vorwiegend Rayleigh-Streuung auftritt, bei der Licht einer höheren Frequenz stärker gestreut wird, als Licht einer niederen Frequenz. Dadurch wird der höherfrequente Anteil des von der Lichtquelle 5 emittierten Lichts während der Ausbreitung insbesondere in Längsrichtung A des Leuchtkörpers 2 und des optischen Elements 11 infolge mehrfacher Streuung deutlich reduziert, während der niederfrequente Anteil des von der Lichtquelle 5 emittierten Lichtes bei seiner Ausbreitung durch das optische Element 11 und den Leuchtkörper 2 weniger von den Trübungsmitteln 4 beeinflusst wird. Aufgrund dessen verändert sich die spektrale Zusammensetzung eines Lichtstrahls entlang seiner Ausbreitungsrichtung - z.B. in Längsrichtung A - durch den Leuchtkörper 2, sofern in dieser Ausbreitungsrichtung eine ausreichende Materialstärke und damit eine ausreichende Anzahl an als Streuzentren dienenden Trübungsmitteln vorhanden ist.

Der Lichtstrahl 7a wird an im als Vorstreuer dienenden optischen Element 11 angeordneten Trübungsmitteln 4 gestreut und tritt demnach nicht mehr in den Leuchtkörper 2 ein, wodurch die Farbtemperatur des in den Leuchtkörper 2 eintretenden Lichtes reduziert wird. Da das optische Element 11 innerhalb des Gehäuses 3 angeordnet ist, können die gestreuten Lichtstrahlen 7a in seitlicher Richtung nicht direkt erblickt werden. Durch den Reflektor 6 werden die Lichtstrahlen 7a in Längsrichtung des Leuchtkörpers 2 abgelenkt. Da der Weg des Lichtstrahls 7a im optischen Element 11, das hinsichtlich der Trübung wie der Leuchtkörper 2 ausgebildet sein kann, bis zur Streuung nur gering ist, weist der Lichtstrahl 7a im Wesentlichen die Farbe des von der Lichtquelle 5 emittierten Lichtstrahls 8 auf, der nicht in das optische Element 11 eingetreten ist.

Demgegenüber tritt der Lichtstrahl 7b nach einer Streuung etwa im mittleren Bereich des Leuchtkörpers 2 aus diesem aus. Entlang seines Ausbreitungsweges im Leuchtkörper 2, wurden mehrfach hochfrequente Anteile an Trübungsmitteln 4 gestreut, sodass der Lichtstrahl 7b eine andere spektrale Zusammensetzung als der Lichtstrahl 7a aufweist und demnach eine für das menschliche Auge sichtbare andere Farbe darstellt. Der Lichtstrahl 7c tritt im oberen Bereich des Leuchtkörpers 2 nach einer Streuung an einem Trübungsmittel 4 aus dem Leuchtkörper 2 aus. Dieser Lichtstrahl weist aufgrund des größeren Ausbreitungsweges im Leuchtkörper 2 einen noch geringeren Anteil an hochfrequentem Licht auf, sodass dieser wiederum eine andere spektrale Zusammensetzung und damit eine andere Farbe als die Lichtstrahlen 7a und 7b aufweist. In Ausbreitungsrichtung, beispielsweise in Längsrichtung A des Leuchtkörpers 2, erfolgt demnach eine für das menschliche Auge sichtbare Farbumwandlung des von der Lichtquelle 5 bestrahlten Leuchtkörpers 2, da diese von den aus dem Leuchtkörper 2 austretenden Lichtstrahlen 7a, 7b, 7c gebildet wird.

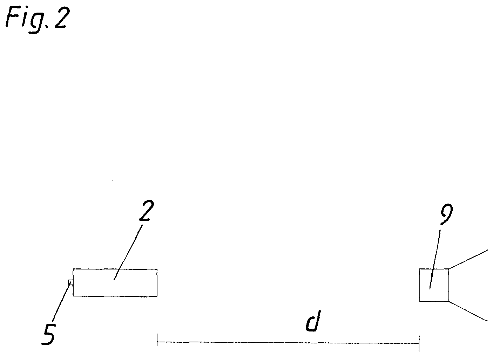

Fig. 2 zeigt den Aufbau der Messanordnung zur Messung der korrelierten Farbanordnung (CCT) und des Farbwiedergabeindex (CRI). Für diese Messung wird z.B. ein zylinderförmiger Leuchtkörper 2 mit einem Durchmesser von 20 mm und Höhen von 20, 40, 60 und 80 mm gewählt. Eine Leuchtdiode ist symmetrisch an einer Deckfläche des zylinderförmigen Leuchtkörpers 2 angeordnet und emittiert Lichtstrahlen in den Leuchtkörper 2. Ein Detektor 9 ist in einem Abstand d von einem Meter gegenüber der von der Lichtquelle 5 entfernten Deckfläche des zylinderförmigen Leuchtkörpers 2 angeordnet, wobei der Detektor 9 genau an der Symmetrieachse des zylinderförmigen Leuchtkörpers 2 platziert ist. Mit dem Detektor 9 können somit Lichtstrahlen detektiert werden, die von der Lichtquelle 5 emittiert und sich in Richtung der Längsrichtung A entlang Symmetrieachse durch den Leuchtkörper 2 ausbreiten.

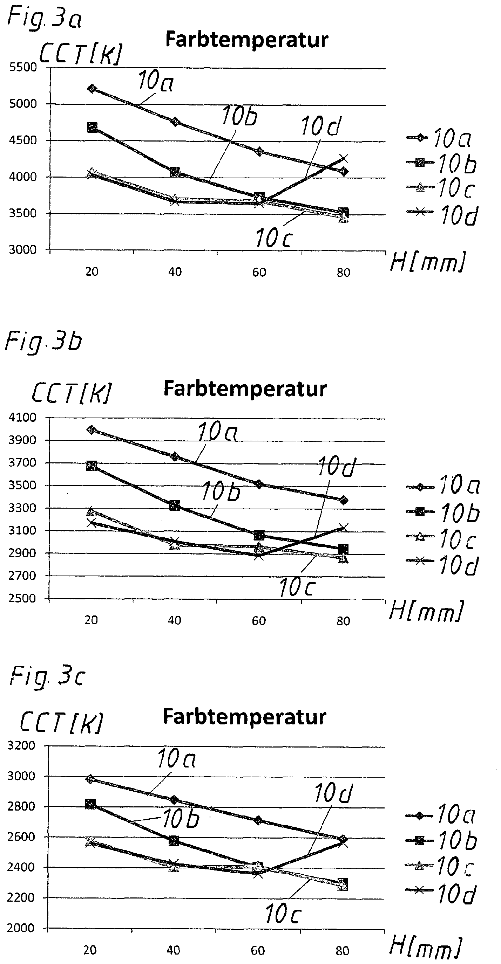

Fig. 3a bis 3c zeigen die Ergebnisse der Messanordnung gemäß Fig. 2 zur Bestimmung der korrelierten Farbtemperatur für zylinderförmige Leuchtkörper 2 mit Höhen von 20, 40, 60 und 80 mm und einem Durchmesser von 20 mm. Diese korrelierte Farbtemperatur ist ein Maß für die Farbe der aus der Deckfläche des zylinderförmigen Leuchtkörpers 2 austretenden Lichtstrahlen. Ein Vergleich mit der korrelierten Farbtemperatur des von der Lichtquelle 5 emittierten Lichts, ohne den Leuchtkörper zu durchqueren, ergibt ein Maß für die Farbumwandlung entlang des Leuchtkörpers 2. Auf den Abszissenachsen ist jeweils die Höhe des zylinderförmigen Leuchtkörpers 2 aufgetragen. Auf den Ordinatenachsen die gemessene korrelierte Farbtemperatur.

Dabei wurden jeweils vier verschiedene Arten von homogenem Trübglas verwendet. Eine erste Ausführungsform des Trübglases ist ein so genanntes "light white opal". Die Messpunkte für diesen Leuchtkörper 2 sind durch Rauten charakterisiert. Eine zweite Ausführungsart des Trübglases ist das so genannte "white opal", dessen Messpunkte durch Quadrate dargestellt sind. Eine dritte Ausführungsart des Trübglases ist das so genannte "white opal platinum white", dessen Messpunkte durch Dreiecke dargestellt sind. Eine vierte Ausführungsform des Trübglases ist das so genannte "platinum white", dessen Messpunkte durch ein x dargestellt sind. Dies Ausführungsarten von Trübgläsern werden in den Figuren 3a bis 3c mit denselben Symbolen dargestellt.

Diese Ausführungsarten unterscheiden sich durch eine zunehmende Trübung, wobei die Transparenz des Leuchtkörpers 2 für Licht des sichtbaren Spektrums bei sich nicht in Betrieb befindlicher Beleuchtungsvorrichtung abnimmt. Den geringsten Trübungsgrad weist dabei "light white opal" gefolgt von "white opal" auf. Einen stärkeren Trübungsgrad weist die Ausführungsform "white opal platinum white", während "platinum white" die stärkste Trübung, und somit die höchste Konzentration an als Streuzentren dienenden Trübungsmittel aufweist.

Die verschiedenen Trübungsgrade können durch eine geeignete Wahl der Parameter des Anlassprozesses, sowie der Menge und Art der dem Grundglas beigemengten Zusatzstoffe stufenlos ineinander übergeführt und an die jeweilige Anwendung angepasst werden. Die Anlasstemperatur wird von der Glaszusammensetzung und dem gewählten Trübungsmittel bestimmt. Die Anlasszeit, also die Zeit, während dem das Glas der Anlasstemperatur ausgesetzt wird, wird in Abhängigkeit des gewünschten Trübungsgrades eingestellt, wobei sich mit zunehmender Anlasszeit eine stärkere Trübung einstellt. Ab einer gewissen Anlasszeit, die von der Menge an beigemengten Trübungsmittel abhängt, stellt sich eine Sättigung ein, ab der der Trübungsgrad auch mit weiter zunehmender Anlasszeit nicht mehr erhöht werden kann.

Für die Messung gemäß Fig. 3a wurde eine Leuchtdiode verwendet, deren korrelierte Farbtemperatur, die mit dem Detektor 9 gemessen werden kann, wenn der Leuchtkörper 2 aus der Messapparatur entfernt wird, 5900 K beträgt.

Für die in den Kurven 10a, b, c, die die Messpunkte jeweils einer Ausführungsart des Trübglases für verschiedene Höhen des zylinderförmigen Leuchtkörpers 2 verbinden, ist deutlich zu erkennen, dass die vom Detektor 9 gemessene korrelierte Farbtemperatur CCT mit zunehmender Höhe H des zylinderförmigen Leuchtkörpers 2 abnimmt. Dies gilt bis auf den letzten Messpunkt (bei einer Höhe des zylinderförmigen Leuchtkörpers 2 von 80 mm) auch für die Verbindungskurve 10d der Messpunkte des "platinum white" Trübglases.

Je niedriger die korrelierte Farbtemperatur, desto geringer ist der Anteil an hochfrequentem Licht, d.h. Licht blauer Farbe hat eine höhere korrelierte Farbtemperatur als Licht roter Farbe. Je höher also der zylinderförmige Leuchtkörper 2 und je länger damit der Weg des sich in Längsrichtung des Leuchtkörpers 2 ausbreitenden Lichtes im Leuchtkörper 2 ist, umso mehr an hochfrequentem Anteil wird weggestreut und umso niedriger ist die gemessene korrelierte Farbtemperatur CCT. Damit einher geht eine Farbumwandlung, des entlang des Leuchtkörpers 2 aus diesem austretenden Lichts und damit des von der Lichtquelle 5 beleuchteten Leuchtkörpers 2. Diese Farbumwandlung ist umso stärker, je höher der zylinderförmige Leuchtkörper, also je länger der Ausbreitungsweg des Lichtes im Leuchtkörper 2 ist.

Fig. 3b zeigt dieselbe Messung wie Fig. 3a mit dem Unterschied, dass die Farbtemperatur der Leuchtdiode 5 einen Wert von etwa 4340 K aufweist. Es tritt derselbe Effekt der abnehmenden, vom Detektor 9 gemessenen korrelierten Farbtemperatur mit zunehmender Höhe H des zylinderförmigen Leuchtkörpers 2 für alle Ausführungsarten des Trübglases bis auf den letzten Messpunkt der Kurve 10d auf. Fig. 3c zeigt dieselbe Messanordnung wie Fig. 3a und 3b, jedoch mit dem Unterschied, dass die korrelierte Farbtemperatur der verwendeten Leuchtdiode einen Wert von etwa 3120 K aufweist. Wiederum treten im Wesentlichen dieselben Effekte auf.

Für die Messungen der Fig. 3a wird eine kaltweißes Licht emittierende Leuchtdiode verwendet. Ein Beispiel einer derartigen Leuchtdiode ist die Type LXML-PWC1-0090 der Baureihe Luxeon Rebel von Philips, die eine korrelierte Farbtemperatur zwischen 4500 K und 10000 K emittieren kann. Ein typischer Farbwiedergabeindex für kaltweißes Licht ist 70. Für die Messungen der Fig. 3b wurde eine neutralweiße Licht emittierende Leuchtdiode verwendet. Ein Beispiel einer derartigen Leuchtdiode ist die Type LXML-PWN1-0090 der Luxeon Rebel Baureihe von Philips, die eine korrelierte Farbtemperatur zwischen 3500 K und 4500 K emittieren kann. Ein typischer Farbwidergabeindex für neutralweißes Licht beträgt 70. Für die Messungen der Fig. 3c wurde eine warmweißes Licht emittierende Leuchtdiode verwendet. Ein Beispiel einer derartigen Leuchtdiode ist die Type LXML-PWW1-0060 der Luxeon Rebel Baureihe der Firma Philips, die Licht mit einer Farbtemperatur zwischen 2540 K und 3500 K emittieren kann. Ein typischer Farbwiedergabeindex für warmweißes Licht ist 85. Die Leuchtdioden werden mit einem konstanten Strom von 350 mA betrieben, wobei Spannungen zwischen 3,6 und 4 Volt verwendet werden.

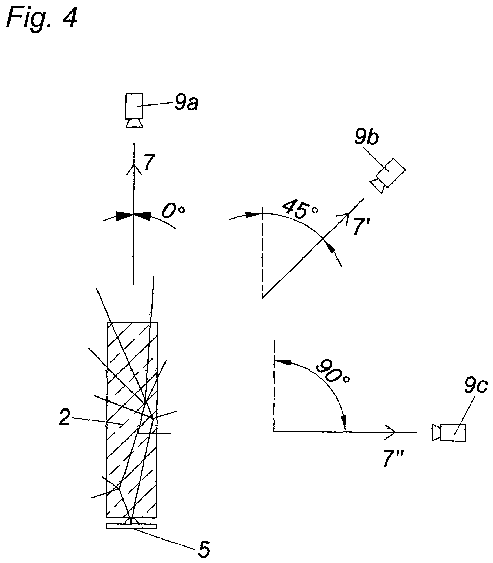

Fig. 4 zeigt eine Messanordnung zur Messung der korrelierten Farbtemperatur, wobei der Detektoren 9a, 9b, 9c in verschiedenen Winkeln um den aus Trübglas bestehenden Leuchtkörper 2 angeordnet werden und dadurch Lichtstrahlen detektieren kann, die verschiedene lange Ausbreitungswege im Leuchtkörper 2 zurückgelegt haben. Die Detektoren 9a, 9b, 9c sind in einer Entfernung von 1 m vom Leuchtkörper 2 angeordnet. Der Trübungsgrad entspricht dem "white opal" der Fig. 3a bis 3c. Die Leuchtdiode selbst weist eine korrelierte Farbtemperatur von 3100 K auf. Der Detektor 9a ist bezüglich des Leuchtkörpers 2 gleich wie in der Messanordnung der Fig. 2, also in der Verlängerung der Längsachse des zylinderförmigen Leuchtkörpers 2 angeordnet und kann Lichtstrahlen 7 detektieren, die sich in Längsrichtung im Leuchtkörper 2 ausgebreitet haben. Gegenüber der Ausgangsfarbtemperatur der Leuchtdiode erfolgt durch die Streuung entlang der gesamten Länge des zylinderförmigen Leuchtkörpers 2 eine starke Farbumwandlung, da ein großer Anteil an hochfrequentem Licht weggestreut wurde. Der vom Detektor 9a gemessene Wert der korrelierten Farbtemperatur beträgt 2200 K.

Der Detektor 9b ist bezüglich der Längsachse des zylinderförmigen Leuchtkörpers 2 um 45° versetzt angeordnet, und kann demnach Lichtstrahlen 7' detektieren, die einen geringeren Weg im Leuchtkörper 2 als die Lichtstrahlen 7 zurückgelegt haben. Entsprechend wurde ein geringerer Anteil an hochfrequentem Licht weggestreut, sodass die Lichtstrahlen 7' einen höheren Anteil an niederfrequentem Licht und somit eine höhere korrelierte Farbtemperatur und damit eine andere Farbe als die Lichtstrahlen 7 aufweisen, wobei diese Farbe einen höheren Blauanteil aufweist. Der vom Detektor 9b gemessene Wert der korrelierten Farbtemperatur beträgt 2200 K.

Der Detektor 9c ist bezüglich der Längsachse des zylinderförmigen Leuchtkörpers 2 um weitere 45° versetzt und somit senkrecht zur Längsachse des zylinderförmigen Leuchtkörpers 2 angeordnet, und kann demnach Lichtstrahlen 7" detektieren, die einen noch geringeren Weg im Leuchtkörper 2 als die Lichtstrahlen 7' zurückgelegt haben. Entsprechend wurde ein noch geringerer Anteil an hochfrequentem Licht weggestreut, sodass die Lichtstrahlen 7" einen noch höheren Anteil an niederfrequentem Licht und somit eine noch höhere korrelierte Farbtemperatur als die Lichtstrahlen 7' aufweisen. Die Farbe der Lichtstrahlen 7" weist somit einen noch höheren blauen Farbanteil auf. Der vom Detektor 9b gemessene Wert der korrelierten Farbtemperatur beträgt 3100 K.

Die erfindungsgemäße Beleuchtungsvorrichtung 1 ermöglicht somit zudem eine Beleuchtung, bei der im Betrieb der Beleuchtungsvorrichtung 1 die Farbe vom Winkel, mit der der Leuchtkörper 2 betrachtet wird abhängt, wodurch ein besonderer ästhetischer Eindruck erzeugt wird.

## Patentansprüche

1. Elektrische Leuchtkerze, mit einem, eine längliche Form aufweisenden Leuchtkörper (2) und einer Lichtquelle (5), wobei der Leuchtkörper (2) als Trübglas ausgebildet ist, wobei die Trübung durch im Leuchtkörper (2) angeordnete Trübungsmittel erreicht wird, **dadurch gekennzeichnet, dass** der Leuchtkörper (2) zumindest in einer Ausbreitungsrichtung (A) des von der Lichtquelle (5) emittierten Lichts eine derartige Materialstärke aufweist, dass infolge der Streuung des von der Lichtquelle (5) emittierten Lichts durch die als Streuzentren dienenden Trübungsmittel in dieser Ausbreitungsrichtung (A) im Leuchtkörper (2) eine für das menschliche Auge sichtbare Farbumwandlung des von der Lichtquelle (5) bestrahlten Leuchtkörpers (2) erfolgt, wobei die als Streuzentren dienenden Trübungsmittel eine Partikelgröße zwischen 10 nm und 100 nm aufweisen.

2. Leuchtkerze nach Anspruch 1, **dadurch gekennzeichnet, dass** die als Streuzentren dienenden Trübungsmittel eine Partikelgröße zwischen 30 nm und 90 nm aufweisen.

3. Leuchtkörper nach Anspruch 1 oder 2, **dadurch gekennzeichnet, dass** der Leuchtkörper (2) eine längliche Form mit einer Längsausdehnung zwischen 10 mm und 100 mm aufweist.

4. Leuchtkerze nach einem der Ansprüche 1 bis 3, **dadurch gekennzeichnet, dass** der Leuchtkörper (2) einen durchschnittlichen Durchmesser zwischen 10 und 30 mm aufweist.

5. Leuchtkerze nach einem der Ansprüche 1 bis 4, **dadurch gekennzeichnet, dass** der Leuchtkörper (2) eine stilisierte Flammenform aufweist und/oder facettiert geschliffen ist.

6. Leuchtkerze nach einem der Ansprüche 1 bis 5, **dadurch gekennzeichnet, dass** der Leuchtkörper (2) als Vollkörper gegebenenfalls mit einer Ausnehmung für die Lichtquelle (5) ausgebildet ist.

7. Leuchtkerze nach einem der Ansprüche 1 bis 6, **dadurch gekennzeichnet, dass** die Lichtquelle (5) eine oder mehrere Leuchtdioden umfasst.

8. Leuchtkerze nach einem der Ansprüche 1 bis 7, **dadurch gekennzeichnet, dass** der Leuchtkörper (2) im Wesentlichen eine homogene Trübung aufweist.

9. Leuchtkerze nach einem der Ansprüche 1 bis 7, **dadurch gekennzeichnet, dass** der Leuchtkörper (2) einen Trübungsverlauf aufweist.

10. Leuchtkerze nach einem der Ansprüche 1 bis 9, **dadurch gekennzeichnet, dass** der Leuchtkörper (2) die Bestandteile eines Grundglases und Trübungsmittel in Form von festen, dem Grundglas beigemengten Teilchen, vorzugsweise Fluorträgern, umfasst.

11. Leuchtkerze nach Anspruch 10, **dadurch gekennzeichnet, dass** die dem Grundglas beigemengten Teilchen als Fluorträger ausgebildet sind und Kryolith umfassen.

12. Leuchtkerze nach Anspruch 10 oder 11, **dadurch gekennzeichnet, dass** die Trübungsmittel in Form einer Emulsion ausgebildet sind.

13. Leuchtkerze nach einem der Ansprüche 1 bis 12, **dadurch gekennzeichnet, dass** zwischen der Lichtquelle (5) und dem Leuchtkörper (2) ein optisches Element (11) angeordnet ist, von dem spektrale Anteile des von der Lichtquelle (5) emittierten und sich in Richtung des Leuchtkörpers (2) ausbreitenden Lichts aus dem optischen Element bzw. dem Leuchtkörper (2) gestreut werden können.

14. Leuchtkerze nach Anspruch 13, **dadurch gekennzeichnet, dass** der Leuchtkörper (2) und das optische Element (11) als einstückiges Bauteil ausgebildet sind.

## Claims

1. An electric light candle comprising a luminous body (2) of an elongated shape and a light source (5), wherein the luminous body (2) is in the form of opal glass, wherein the opaqueness is achieved by opacifying agents arranged in the luminous body (2), **characterised in that** the luminous body (2) is of such a material thickness, at least in a direction (A) of propagation of the light emitted by the light source (5), that a colour conversion visible to the human eye of the luminous body (2) irradiated by the light source (5) is effected as a consequence of the scattering of the light emitted by the light source (5) by the opacifying agents serving as scattering centres in said propagation direction (A) in the luminous body (2), wherein the opacifying agents serving as scattering centres have a particle size of between 10 nm and 100 nm.

2. A light candle according to claim 1 **characterised in that** the opacifying agents serving as scattering centres are of a particle size of between 30 nm and 90 nm.

3. A light candle according to claim 1 or claim 2 **characterised in that** the luminous body (2) is of an elongated shape having a length of between 10 mm and 100 mm.

4. A light candle according to one of claims 1 to 3 **characterised in that** the luminous body (2) is of an average diameter of between 10 and 30 mm.

5. A light candle according to one of claims 1 to 4 **characterised in that** the luminous body (2) has a stylised flame shape and/or is ground faceted.

6. A light candle according to one of claims 1 to 5 **characterised in that** the luminous body (2) is in the form of a solid body possibly with a recess for the light source (5).

7. A light candle according to one of claims 1 to 6 **characterised in that** the light source (5) has one or more light emitting diodes.

8. A light candle according to one of claims 1 to 7 **characterised in that** the luminous body (2) substantially has homogeneous opaqueness.

9. A light candle according to one of claims 1 to 7 **characterised in that** the luminous body (2) has an opaqueness progression.

10. A light candle according to one of claims 1 to 9 **characterised in that** the luminous body (2) includes the constituent parts of a basic glass and opacifying agents in the form of solid particles added to the basic glass, preferably fluorine carriers.

11. A light candle according to claim 10 **characterised in that** the particles added to the basic glass are in the form of fluorine carriers and include cryolyte.

12. A light candle according to claim 10 or claim 11 **characterised in that** the opacifying agents are in the form of an emulsion.

13. A light candle according to one of claims 1 to 12 **characterised in that** arranged between the light source (5) and the luminous body (2) is an optical element (11) by which spectral components of the light emitted by the light source (5) and propagated in the direction of the luminous body (2), can be scattered out from the optical element or the luminous body (2).

14. A light candle according to claim 13 **characterised in that** the luminous body (2) and the optical element (11) are in the form of a one-piece component.

## Revendications

1. Bougie lumineuse électrique, avec un corps lumineux (2) présentant une forme oblongue et une source lumineuse (5), dans laquelle le corps lumineux (2) est conçu comme un verre opalin, l'opalescence étant obtenue par des moyens d'opalescence disposés dans le corps lumineux (2), **caractérisée en ce que** le corps lumineux (2) présente au moins dans un sens de diffusion (A) de la lumière émise par la source lumineuse (5), une épaisseur du matériau telle que, suite à la diffusion de la lumière émise par la source lumineuse (5), se produit, par l'intermédiaire des moyens d'opalescence servant comme centres de diffusion, dans ce sens de diffusion (A) dans le corps lumineux (2), une transformation de couleur, visible à l'oeil humain, du corps lumineux (2) irradié par la source lumineuse (5), dans laquelle les moyens d'opalescence servant comme centres de diffusion présentent une taille de particules située entre 10 nm et 100 nm.

2. Bougie lumineuse selon la revendication 1, **caractérisée en ce que** les moyens d'opalescence servant comme centres de diffusion présentent une taille de particules située entre 30 nm et 90 nm.

3. Corps lumineux selon la revendication 1 ou 2, **caractérisé en ce que** le corps lumineux (2) présente une forme oblongue avec une extension longitudinale située entre 10 mm et 100 mm.

4. Bougie lumineuse selon l'une des revendications 1 à 3, **caractérisée en ce que** le corps lumineux (2) présente un diamètre moyen situé entre 10 et 30 mm.

5. Bougie lumineuse selon l'une des revendications 1 à 4, **caractérisée en ce que** le corps lumineux (2) présente une forme de flamme stylisée et/ou taillée à facettes.

6. Bougie lumineuse selon l'une des revendications 1 à 5, **caractérisée en ce que** le corps lumineux (2) est conçu comme un corps plein également avec un évidement pour la source lumineuse (5).

7. Bougie lumineuse selon l'une des revendications 1 à 6, **caractérisée en ce que** la source lumineuse (5) comprend une ou plusieurs diodes lumineuses.

8. Bougie lumineuse selon l'une des revendications 1 à 7, **caractérisée en ce que** le corps lumineux (2) présente essentiellement une opalescence homogène.

9. Bougie lumineuse selon l'une des revendications 1 à 7, **caractérisée en ce que** le corps lumineux (2) présente un tracé d'opalescence.

10. Bougie lumineuse selon l'une des revendications 1 à 9, **caractérisée en ce que** le corps lumineux (2) comprend les éléments d'un verre de base et des moyens d'opalescence sous forme de particules fixes, ajoutées au verre de base, de préférence des porteurs fluorés.

11. Bougie lumineuse selon la revendication 10, **caractérisée en ce que** les particules ajoutées au verre de base sont conçues comme des porteurs fluorés et comprennent de la cryolite.

12. Bougie lumineuse selon la revendication 10 ou 11, **caractérisée en ce que** les moyens d'opalescence sont conçus sous forme d'une émulsion.

13. Bougie lumineuse selon l'une des revendications 1 à 12, **caractérisée en ce qu'**entre la source lumineuse (5) et le corps lumineux (2) est disposé un élément optique (11), d'où des fractions spectrales de la lumière émise de la source lumineuse (5) et se diffusant dans le sens du corps lumineux (2) peuvent être dispersées à partir de l'élément optique ou du corps lumineux (2).

14. Bougie lumineuse selon la revendication 13, **caractérisée en ce que** le corps lumineux (2) et l'élément optique (11) sont conçus comme un composant d'une seule pièce.
